(19) Europäisches Patentamt
European Patent Office
Office européen des brevets

(11) **EP 2 944 060 B1**

(12) **EUROPEAN PATENT SPECIFICATION**

(45) Date of publication and mention
of the grant of the patent:
**26.09.2018 Bulletin 2018/39**

(21) Application number: **14717473.4**

(22) Date of filing: **07.01.2014**

(51) Int Cl.:
*H04L 12/813* (2013.01)     *H04L 12/14* (2006.01)
*H04M 15/00* (2006.01)     *H04L 12/801* (2013.01)
*H04L 12/851* (2013.01)

(86) International application number:
**PCT/IB2014/000075**

(87) International publication number:
**WO 2014/108801 (17.07.2014 Gazette 2014/29)**

(54) **COMMUNICATION QUOTA ALLOCATION METHOD AND CORRESPONDING ONLINE CHARGING SYSTEM**

KOMMUNIKATIONSQUOTENZUWEISUNGSVERFAHREN UND ENTSPRECHENDES ONLINELADESYSTEM

PROCÉDÉ D'ATTRIBUTION DE QUOTA DE COMMUNICATION ET SYSTÈME DE PAIEMENT EN LIGNE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2013 CN 201310021275**

(43) Date of publication of application:
**18.11.2015 Bulletin 2015/47**

(73) Proprietor: **Alcatel Lucent**
**91620 Nozay (FR)**

(72) Inventors:
• **ZHANG, Yang**
**Shanghai 201206 (CN)**
• **HU, Yongpei**
**Shanghai 201206 (CN)**

(74) Representative: **Menzietti, Domenico et al**
**Alcatel Lucent**
**Intellectual Property & Standards**
**70430 Stuttgart (DE)**

(56) References cited:
**EP-A1- 1 662 701       EP-A2- 0 666 665**
**US-A1- 2011 040 663**

• **HAKALA L MATTILA ERICSSON J-P KOSKINEN M STURA J LOUGHNEY NOKIA H: "Diameter Credit-Control Application; rfc4006.txt", 20050801, 1 August 2005 (2005-08-01), XP015041993, ISSN: 0000-0003**
• **NOKIA SIEMENS NETWORKS: "Editorial clean-up", 3GPP DRAFT; S5-093749 R9 CR 32 299 EDITORIAL CLEAN-UP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai; 20091109, 9 November 2009 (2009-11-09), XP050399727, [retrieved on 2009-11-02]**

## Description

## Technical Field

The present invention relates to allocations of communication quotas in communication networks.

## Technical Background

In an Online Charging System (OCS), in order to realize real time control, a certain quota is generally reserved for a communication (user) in advance, and thereafter, the communication (user) is charged according to the actually consumed amount. Therefore, it's required to determine what quota should be allocated to the user.

Conventional quota allocation mechanisms in the OCS are based on available credits (i.e. balance in the user's account). Considering that there may be multiple concurrent calls, the available credit may be a percentage of the total available balance. In some cases, the allocated quota is limited by a minimal/maximal quota threshold. The method is efficient for conventional circuit switched services which take time as a charging reference, because the quota is used up with a fixed speed in each 60 seconds or 1 minute. However, with the emergence of various colorful data services, these data services' bursting characteristic causes a great challenge to the conventional quota allocation methods, so how to manage data sessions effectively become a hot task of the OCS.

H. Hakala, L. Mattila Ericsson, J-P. Koskinen, M. Stura, J. Loughney Nokia: Diameter Credit-Control Application; rfc4006.txt; 1 August 2005; teaches a Diameter application that can be used to implement real-time credit-control for a variety of end user services such as network access, Session Initiation Protocol (SIP) services, messaging services, and download services.

## Summary

The present invention is defined in the appended independent claims to which reference should be made. Advantageous features are set out in the appended dependent claims. In particular, conventional quota allocation mechanisms may not account for bursting property of data services if they are used in these services. For different kinds of data services, conventional quota allocation mechanisms still allocate communication quotas according to the balance in the user's account, while the balance in the user's account is usually irrelevant to a consumed rate of the user to the quota. If the consumed rate of the user to the quota is higher than the quota allocated each time, it may cause too heavy signalling overheads and traffics for requesting quotas; however, if the consumed rate of the user to the quota is low, redundantly allocated quota results in a waste. Quotas can not be balanced between all concurrent calls intelligently.

For example, when a data session is established for downloading a file with 100M bytes, according to conventional allocating mechanisms, a quota with 5M bytes is allocated out for the session constantly. If a downloading rate of the user is very fast, then each time when the quota is exceeded, a packet gateway for controlling traffics has to retransmit a request to the OCS for requesting a new license. Therefore, in order to complete the download of the file, the packet gateway is required to perform at least 20 times of signalling interactions with the OCS, which may cause a great signalling traffic/overhead between the packet gateway and the OCS. For another example, when a data session is established for browsing web pages only, it consumes the quota slowly, but the conventional allocating mechanism still reserves 5M bytes for the data session each time and a corresponding credit is reserved, which may cause other calls probably to be unserved or served with a poor Quality of Service (QoS) because of lacking credits.

In order to solve the above technical problems, the present invention proposes a new quota allocation mechanism which may be called Differential Quota Allocation (DQA), in which amount of a quota may be adjusted based on the consumption speed of the quota. In a preferred mechanism, if the consumption speed is increasing, the quota allocated this time should be larger than the quota allocated last time; on the contrary, if the consumption speed is decreasing, the quota allocated this time should be smaller than the quota allocated last time.

Based on the above inventive concepts, a method for allocating quotas to a communication is provided according to a method aspect of the invention, comprising steps of: i) allocating a quota to the communication; ii) acquiring an actual quota consumption speed for the communication based on the allocated quota; and iii) allocating a new quota to the communication according to the actual quota consumption speed.

In this aspect, the new quota is allocated according to the actual quota consumption speed, which provides more flexibility to quota allocation.

In a preferred embodiment, in the step iii: when the consumption speed is increasing, a larger quota is allocated as the new quota; and when the consumption speed is decreasing, a smaller quota is allocated as the new quota.

In this embodiment, a larger quota is allocated to a communication which has a high quota consumption speed, such that signalling interactions between a traffic control device and the OCS is stabilized or reduced to mitigate the impact of bursting data services with big traffics to the OCS, to reduce traffic overheads caused by the control and to promote network performance. A smaller quota is allocated to a communication which has a low quota consumption speed, such that credits may be

distributed among all concurrent calls more reasonably so as to reduce the occurrence of a case in which the allocated quota can not be actually consumed, to avoid the occurrence of wasting and lacking credit and to prevent other concurrent sessions from lacking quotas.

In an alternative embodiment, the quota may be increased when the consumption speed exceeds a maximal threshold and the quota may be decreased when the consumption speed is lower than a minimal threshold, according to consumption speeds of the quotas allocated in the latest time or recent several times. Moreover, those skilled in the art may also conceive other embodiments to allocate new quotas according to consumption speeds of previous quotas under the teaching of the present invention, which will not be described in detail here.

In a preferred embodiment, the step ii and step iii are iterated until the communication is completed.

In this embodiment, the allocated quotas are adjusted several times during the entire communication process, which results in a real time solution.

The step ii further comprises acquiring a consumption speed of a quota allocated in a latest time; and acquiring an average consumption speed of a certain number of quotas allocated before the latest time. The step iii further comprises adjusting the quota allocated in the latest time, the amount of adjusting being dependent on the difference between the consumption speed of the quota allocated in the latest time and the average consumption speed of the certain number of quotas allocated before the latest time; and the certain number includes one or more.

The quota to be allocated is adjusted according to the difference between the consumption speed of the quota allocated in the latest time and average consumption speed of a certain number of quotas allocated before the latest time, such that changes of consumption speeds of quotas can be taken into account properly. The number for averaging may be chosen according to actual needs. If a short term change is mainly considered, number for averaging may be less; while if a long term change is mainly considered, number for averaging may be larger.

In a preferred embodiment, before the step i, the method further comprises a step of receiving a quota request from a traffic control device. In the step i, the traffic control device is informed of the amount of the allocated quota. In the step ii, an actual consumed amount of quota for the communication based on the allocated quota and actual communication time for the communication based on the allocated quota are obtained from the traffic control device, and the consumption speed of the quota is calculated. In the step iii, the traffic control device is informed of the amount of the new quota.

This embodiment provides an interaction method between this invention and network elements such as traffic control devices (such as a packet gateway).

In a further embodiment, in the step i, the amount of the allocated quota, the validity time of the quota, a threshold for actively requesting reallocation of quotas are sent to the traffic control device, and the sending time is recorded, the threshold for requesting reallocation of quotas being associated with the amount of the allocated quota.

The step ii comprises

receiving and recording the consumed amount of quota consumed within the validity time of the quota and sent by the traffic control device, and recording the receiving time;

calculating and recording the consumption speed of the allocated quota according to the consumed amount of quota and time difference between the recorded receiving time and sending time; and

calculating the average consumption speed of the certain number of quotas allocated before the latest time from information recorded in previously repeated step ii.

This embodiment provides a more specific method for determining consumption speeds and average consumption speed of quotas, in which the consumed amount and consumed time of the quota allocated each time are recorded and calculations are performed according to the recorded data.

In a further embodiment, the step ii further comprises receiving an actually consumed quota sent by the traffic control device after expiration of the valid time of the quota; or receiving an actually consumed quota sent by the traffic control device when the consumed amount of quota reaches the threshold for actively requesting reallocation of quotas before expiration of the validity time of the quota.

In this embodiment, if the communication rate is high, the quota may be used up before the expiration of the validity time of the quota, therefore, the traffic control device sends the consumed quota and requests for reallocation before the expiration of the validity time. If the communication rate is low, the quota may not be used up after the expiration of the validity time of the quota, therefore, the traffic control device sends the actually consumed quota after the expiration of the validity time.

Accordingly, in a product aspect of the invention, there is provided an online charging system, comprising: an allocating unit configured to allocate a quota to a communication; a processing unit configured to acquire an actual quota consumption speed for the communication based on the allocated quota; the processing unit is further configured to allocate a new quota to the communication according to the actual quota consumption speed; and the allocating unit and the processing unit operate iteratively.

**Description of Drawings**

Other features, objectives and advantages of the present invention will become more apparent after reading the detailed description of nonrestrictive embodiments made with reference to the accompanying figures, wherein:

Fig. 1 illustrates a signalling interaction process between a packet gateway and an OCS according to embodiments of the present invention;

Fig. 2 shows an amount of quota allocated for a quota with an increasing consumption speed according to embodiments of the invention; and

Fig. 3 shows an amount of quota allocated for a quota with a decreasing consumption speed according to embodiments of the invention.

**Detailed description of the Preferred Embodiments**

This invention provides a method for allocating quota to a communication, comprising steps of:

i) allocating a quota to the communication;

ii) acquiring an actual quota consumption speed for communication based on the allocated quota;

iii) allocating a new quota to the communication according to the actual quota consumption speed.

General description of the allocation mechanism of the present invention will be given below in conjunction with formulas. Subsequently, specific applications of the allocation mechanism of the present invention will be described in conjunction with two specific examples.

1. Firstly, when a data service starts, an initial quota is allocated for communications of the service. In one embodiment, conventional quota allocation mechanisms may be used to determine the initial quota according balance in the user's account. In a variant embodiment, a predetermined initial quota may be allocated for communications of the service. It may be understood that specific methods for allocating the initial quota and the allocated amount of initial quota do not impact the implementation of the inventive concept of the present invention.
2. During the next quota allocation (generally when the initial quota is used up or the valid period of the quota is expired), the DQA method proposed in embodiments of the invention is used, in which the consumption speed of the allocated quota will impact the quota allocated next time.

In one embodiment, consumption speeds of the quotas allocated in the last one or more times are calculated, such that the quota may be increased when the consumption speed exceeds a maximal threshold and the quota may be decreased when the consumption speed is lower than a minimal threshold.
However, in another embodiment, it's calculated whether the consumption speed of the allocated quota is increasing or decreasing. If the consumption speed is increasing, the quota should be allocated larger than the quota allocated last time; otherwise, if the consumption speed is decreasing, the quota should be allocated smaller than the quota allocated last time.
Two specific example formulas are given below to illustrate how to determine the allocated quota quantitively.

$$Q_n = Q_{n-1} + \left( \frac{U_{n-1}}{t_{n-1}} - \frac{\sum\limits_{i=n-1-x}^{n-2} \frac{U_i}{t_i}}{x} \right) * C,$$

or

$$Q_n = Q_{n-1} + \left( \frac{U_{n-1}}{t_{n-1}} - \frac{\sum_{i=n-1-x}^{n-2} U_i}{\sum_{i=n-1-x}^{n-2} t_i} \right) * C,$$

where

$$n = 2, 3, \ldots; x = 1, 2, \ldots n - 2;$$

$$U_0 = Q_1, t_0 = VT_1$$

and where

$Q_n$ is the quota allocated in the nth time of allocation;

$Q_{n-1}$ is the quota allocated in the *n-1*th time of allocation;

$U_{n-1}$ is the actually consumed quota in the quota allocated in the *n-1*th time of allocation, with a consumed time of $t_{n-1}$;

$U_{n-2}$ is the actually consumed quota in the quota allocated in the *n-2*th time of allocation, with a consumed time of

$t_{n-2}$; $\dfrac{\sum_{i=n-1-x}^{n-2} \dfrac{U_i}{t_i}}{x}$ and $\dfrac{\sum_{i=n-1-x}^{n-2} U_i}{\sum_{i=n-1-x}^{n-2} t_i}$ are two different kinds of methods to obtain the average quota consumption speeds of quotas allocated in previous x times of allocations before the last allocation (i.e. from the *n-1-x*th time of allocation to the *n-2*th time of allocation). Here, $\dfrac{\sum_{i=n-1-x}^{n-2} \dfrac{U_i}{t_i}}{x}$ is obtained by averaging consumption speeds of quotas allocated in each time; while $\dfrac{\sum_{i=n-1-x}^{n-2} U_i}{\sum_{i=n-1-x}^{n-2} t_i}$ is obtained by averaging total consumed amount of allocated quotas over the entire time range. Although they are different in forms, they both describe the consumption speed of previous quotas. It's understood that other formulas are applicable but not illustrated in the invention.

C is a configurable time constant, the unit of which is in the same order of the validity time (VT) of the quota, and it may be larger than, smaller than or equal to the VT. Different values of C determine different amounts of changes.

$\dfrac{U_{n-1}}{t_{n-1}}$ is the consumption speed of the quota allocated in the last allocation.

In the formula, the difference between $\dfrac{U_{n-1}}{t_{n-1}}$ and $\dfrac{\sum_{i=n-1-x}^{n-2} \dfrac{U_i}{t_i}}{x}$ or $\dfrac{\sum_{i=n-1-x}^{n-2} U_i}{\sum_{i=n-1-x}^{n-2} t_i}$ is calculated and multiplied by C to be used as an adjusting amount to the quota $Q_{n-1}$ allocated in the last allocation. It can be seen that if $\dfrac{U_{n-1}}{t_{n-1}}$ is relatively large, the quota allocated this time will be increased; otherwise, the quota allocated this time will be decreased.

Applications of embodiments of the present invention will be described in connection with two more specific examples below. Here, parameters in the above formula are defined as below.

VT of each quota is fixed to 120s;

C = 100s, which is in the same order with VT;

x = 1, i.e. the consumption speed of the quota allocated in the last (the *n-1*th time of) allocation is to be compared with the consumption speed of the quota allocated in the second last (the *n-2*th time of) allocation, and the difference between them will impact the quota to be allocated this time.

The aforementioned formula is simplified as

$$Q_n = Q_{n-1} + \left( \frac{U_{n-1}}{t_{n-1}} - \frac{U_{n-2}}{t_{n-2}} \right) * C, (n = 2, 3...) \text{, where } U_0 = Q_1, t_0 = VT.$$

First Example

In this example, the consumption speed of the quota is increasing.

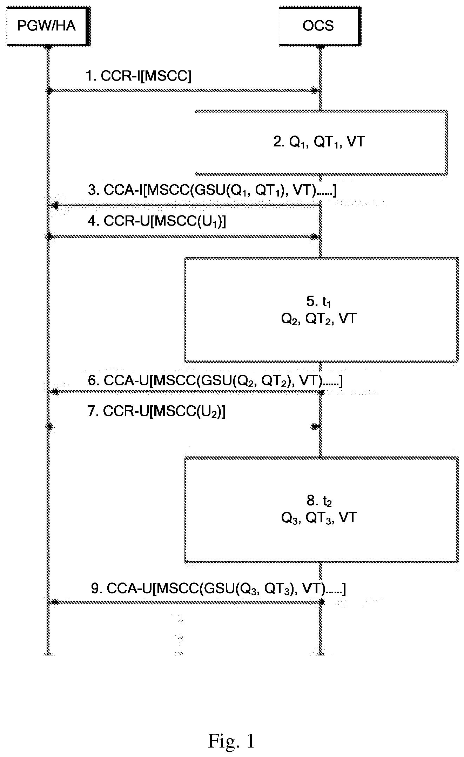

As shown in Fig. 1, the DIAMETER protocol is used between an OCS and a traffic control PGW/HA for signalling interactions.

As shown in Fig. 1, in Step 1, the PGW/HA sends a DIAMETER based Credit Control Request (CCR-Initial or CCR-I) to the OCS. An interface unit of the OCS receives the Credit Control Request CCR-I. The Credit Control Request is used as a quota request for the communication. The CCR-I includes an AVP (attribute value pair), Multiple-Services-Credit-Control [Rating-Group...] (MSCC) etc.

In Step 2, an allocating unit of the OCS determines available credits and allocates a quota $Q_1$, a validity time VT of the quota and a threshold $QT_1$. Here, $Q_1$=5M bytes; VT=120s, which means the quota will become invalid after 120s and a new quota should be requested, and which is determined flexibly by operators; $QT_1$=4.5M bytes, which is 90% of $Q_1$, and which is a threshold used by the traffic control device to request a new quota when the traffic for the communication reaches the threshold. Generally speaking, there is a one to one correspondence between QT and the allocated quota Q.

In Step 3, the OCS sends a DIAMERTER based Credit-Control-Answer (CCA-Initial or CCA-I) back to the PGW/HA through the interface unit. The Credit-Control-Answer includes attribute value pairs, Multiple-Services-Credit-Control [Rating-Group, $Q_1$(5M), $QT_1$(4.5M), VT(120s)...] etc. Moreover, the interface unit of the OCS records the sending time of the CCA-I in order to calculate the consumption speed of the quota.

Thereafter, the PGW/HA monitors the usage of the quota of the communication traffic.

Since the communication is to load files, the consumed quota may quickly reach its threshold $QT_1$ before 120s is expired. At this time, the PGW/HA will report to the OCS the consumed quota $U_1$ (which may equal to $QT_1$) and request a reallocation of quota. In Step 4, the PGW/HA reports to the OCS a CCR Update (also called CCR-U) which includes attribute value pairs, Multiple-Services-Credit-Control [Rating-Group, $U_1$(4.5M)...] etc.

The interface unit of the OCS receives the CCR-U sent by the PGW/HA and obtains the amount of consumed quota, which is 4.5M bytes. Also, the interface unit records the receiving time of the CCR-U.

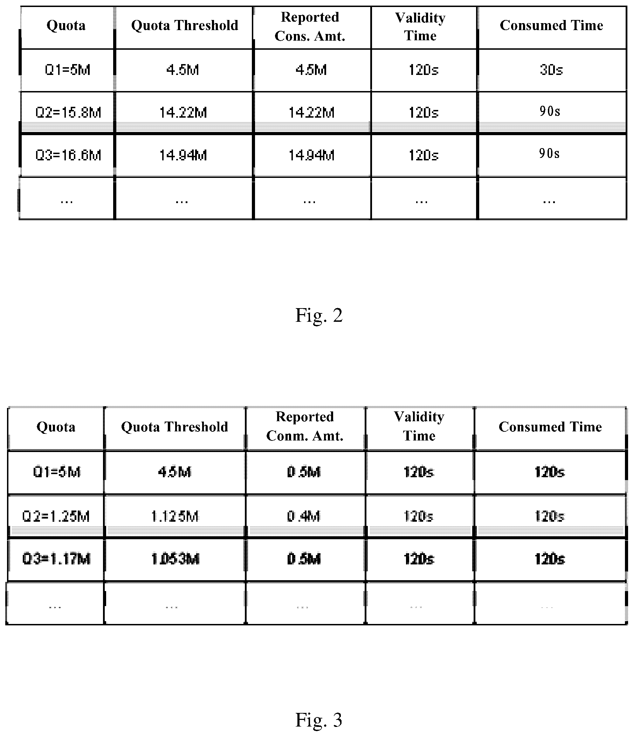

In Step 5, a processor of the OCS charges the amount of consumed quota. What is more important, the processor of the OCS obtains the time difference between the recorded receiving time and sending time. In this embodiment, it's supposed that the time difference is 30s, i.e. a quota of 4.5M bytes is used up in $t_1$=30s, as shown in Fig. 2.

In Step 5, subsequently, the processor of the OCS obtains and records the consumption speed of the allocated quota, which is 4.5M/30s.

Furthermore, the processor of the OCS calculates a new quota $Q_2$ to be allocated to the communication:

$$Q_2 = 5M + (4.5M/30s - 5M/120s) * 100s = 15.8M,$$

according to the above formula

$$Q_n = Q_{n-1} + (U_{n-1}/t_{n-1} - U_{n-2}/t_{n-2}) * C, (n = 2, 3...).$$

It can be seen that since the consumption speed of the quota is greatly increased (compared with what is anticipated), the quota $Q_2$ allocated this time is larger than the initially allocated quota $Q_1$. Accordingly, there is a threshold $QT_2$=15.8M x 90% = 14.22M.

In Step 6, the OCS sends a DIAMERTER based CCA-update or CCA-U back to the PGW/HA. The Credit-Control-Answer includes attribute value pairs, Multiple-Services-Credit-Control [Rating-Group, $Q_2$(15.8M), $QT_2$(14.22M), VT(120s)...] etc. Moreover, the interface unit of the OCS records the sending time of the CCA-U in order to calculate the consumption speed of the quota. The validity time of the quota is still 120s. It can be understood that the system may also change the validity time into other values.

Thereafter, the PGW/HA monitors the usage of the quota of the communication traffic.

When the consumed quota reaches the quota threshold $QT_2$, the PGW/HA will report to the OCS the consumed quota $U_1$ and request a reallocation of quota. In Step 7, the PGW/HA reports to the OCS a CCR-U which includes attribute value pairs, Multiple-Services-Credit-Control [Rating-Group, $U_2$(14.22M)...] etc.

The interface unit of the OCS receives the CCR-U sent by the PGW/HA and obtains the amount of consumed quota, which is 14.22 bytes. Also, the interface unit records the receiving time of the CCR-U.

In Step 8, the processor of the OCS charges the amount of consumed quota. What is more important, the processor of the OCS obtains the time difference between the recorded receiving time and sending time. In this embodiment, it's supposed that the time difference is 90s, i.e. a quota of 14.22M bytes is used up in $t_2$=90s, as shown in Fig. 2.

In Step 8, subsequently, the processor of the OCS obtains and records the consumption speed of the allocated quota, which is 14.22M/90s.

Furthermore, the processor of the OCS calculates a new quota $Q_3$ to be allocated to the communication:

$$Q_3 = Q_2 + (U_2/t_2 - U_1/t_1) * C$$

$$= 15.8M + (14.22M/90\,s - 4.5M/30s) * 100s = 16.6M,$$

according to the above formula:

$$Q_n = Q_{n-1} + (U_{n-1}/t_{n-1} - U_{n-2}/t_{n-2}) * C, (n=2, 3\ldots).$$

It can be seen that since the quota consumption speed is increasing, the quota $Q_3$ allocated this time is larger than the quota $Q_2$ allocated last time. Accordingly, there is a threshold $QT_3$ =16.6M x 90% = 14.94M. However, as can be seen, the quota consumption speed is not increased too much from previous one. That is to say, the allocated quota may substantially meet the requirement of the communication, and therefore, the quota $Q_3$ allocated this time is not increased too much from $Q_2$.

In Step 9, the OCS sends a DIAMERTER based CCA-U back to the PGW/HA. The Credit-Control-Answer includes attribute value pairs, Multiple-Services-Credit-Control [Rating-Group, $Q_3$(16.6M), $QT_3$(14.94M), VT(120s)...] etc. Moreover, the interface unit of the OCS records the sending time of the CCA-U in order to calculate the consumption speed of the quota.

Thereafter, the above steps are repeated until the communication is completed.

Using embodiments of the invention, under the assumption that an average quota threshold is 14M (i.e. the average quota is 15.55M), in order to download a file with 100M bytes, the PGW and the OCS need to interact (100 - 4.5)/ 14 + 1 = 7.8 times. Here, "-4.5" and "+1" represent the initially allocated quota in the first time. However, if conventional schemes are used, in which the quota threshold is 4.5M each time (i.e. the allocated quota is 5M each time), in order to download a file with 100M bytes, the PGW and the OCS need to interact 100/4.5 = 22 times. As can be seen, using embodiments of the invention, number of interactions required between the PGW and the OCS is greatly decreased, such that overheads and traffics caused by the signalling are saved.

Second Example

In this example, the consumption speed of the quota is decreasing.

As shown in Fig. 1, the DIAMETER protocol is used between an OCS and a traffic control PGW/HA for signalling interactions.

As shown in Fig. 1, in Step 1, the PGW/HA sends a DIAMERTER based Credit Control Request (CCR-Initial or CCR-I) to the OCS. An interface unit of the OCS receives the Credit Control Request CCR-I. The Credit Control Request is used as a quota request for the communication. The CCR-I includes an AVP (attribute value pair), Multiple-Services-Credit-Control [Rating-Group...] (MSCC) etc.

In Step 2, an allocating unit of the OCS determines available credits and allocates a quota $Q_1$, a validity time VT of the quota and a threshold $QT_1$. Here, $Q_1$=5M bytes; VT=120s, which means the quota will become invalid after 120s and a new quota should be requested, and which is determined flexibly by operators; $QT_1$=4.5M bytes, which is 90% of $Q_1$, and which is a threshold used by the traffic control device to request a new quota when the traffic for the communication reaches the threshold. Generally speaking, there is a one to one correspondence between QT and the allocated quota Q.

In Step 3, the OCS sends a DIAMERTER based Credit-Control-Answer (CCA-Initial or CCA-I) back to the PGW/HA through the interface unit. The Credit-Control-Answer includes attribute value pairs, Multiple-Services-Credit-Control [Rating-Group, $Q_1$(5M), $QT_1$(4.5M), VT(120s)...] etc. Moreover, the interface unit of the OCS records the sending time of the CCA-I in order to calculate the consumption speed of the quota.

Thereafter, the PGW/HA monitors the usage of the quota of the communication traffic.

Since the communication is to browse web pages, which need only a little traffic, when 120s is expired, the consumed quota has not reached its threshold $QT_1$. After 120s is expired, the PGW/HA continues to report to the OCS the consumed quota $U_1$ and request a reallocation of quota. In Step 4, the PGW/HA reports to the OCS a CCR Update (also called CCR-U) which includes attribute value pairs, Multiple-Services-Credit-Control [Rating-Group, $U_1$(0.5M)...] etc.

The interface unit of the OCS receives the CCR-U sent by the PGW/HA and obtains the amount of consumed quota, which is 0.5M bytes. Also, the interface unit records the receiving time of the CCR-U.

In Step 5, a processor of the OCS charges the amount of consumed quota. What is more important, the processor of the OCS obtains the time difference between the recorded receiving time and sending time. In this embodiment, it's supposed that the time difference is 120s, i.e. a quota of 0.5M bytes is used up in $t_1$=120s, as shown in Fig. 3.

In Step 5, subsequently, the processor of the OCS obtains and records the consumption speed of the allocated quota, which is 0.5M/120s.

Furthermore, the processor of the OCS calculates a new quota $Q_2$ to be allocated to the communication:

$$Q_2 = 5M + (0.5M/120s - 5M/120s) * 100s = 1.25M,$$

according to the above formula:

$$Q_n = Q_{n-1} + (U_{n-1}/t_{n-1} - U_{n-2}/t_{n-2}) * C, (n = 2, 3\ldots).$$

It can be seen that since the consumption speed of the quota is decreased (compared with what is anticipated), the quota $Q_2$ allocated this time is smaller than the initially allocated quota $Q_1$. Accordingly, there is a threshold $QT_2$=1.25M x 90% = 1.125M.

In Step 6, the OCS sends a DIAMERTER based CCA-update or CCA-U back to the PGW/HA. The Credit-Control-Answer includes attribute value pairs, Multiple-Services-Credit-Control [Rating-Group, $Q_2$(1.25M), $QT_2$(1.125M), VT(120s)...] etc. Moreover, the interface unit of the OCS records the sending time of the CCA-U in order to calculate the consumption speed of the quota.

Thereafter, the PGW/HA monitors the usage of the quota of the communication traffic.

When 120s is expired, the consumed quota does not reach the quota threshold $QT_2$. The PGW/HA will report to the OCS the consumed quota $U_2$=0.4M and request a reallocation of quota. In Step 7, the PGW/HA reports to the OCS a CCR-U which includes attribute value pairs, Multiple-Services-Credit-Control [Rating-Group, $U_2$(0.4M)...] etc.

The interface unit of the OCS receives the CCR-U sent by the PGW/HA and obtains the amount of consumed quota, which is 0.4M bytes. Also, the interface unit records the receiving time of the CCR-U.

In Step 8, the processor of the OCS charges the amount of consumed quota. What is more important, the processor of the OCS obtains the time difference between the recorded receiving time and sending time. In this embodiment, it's supposed that the time difference is 120s, i.e. a quota of 0.4M bytes is used up in $t_2$=120s, as shown in Fig. 2.

In Step 8, subsequently, the processor of the OCS obtains and records the consumption speed of the allocated quota, which is 0.4M/120s.

Furthermore, the processor of the OCS calculates a new quota $Q_3$ to be allocated to the communication:

$$Q_3 = Q_2 + (U_2/t_2 - U_1/t_1) * C$$

$$= 1.25M + (0.4M/120s - 0.5M/120s) * 100s = 1.17M,$$

according to the above formula:

$$Q_n = Q_{n-1} + (U_{n-1}/t_{n-1} - U_{n-2}/t_{n-2}) * C, (n=2, 3\ldots).$$

It can be seen that since the quota consumption speed is decreasing, the quota $Q_3$ allocated this time is smaller than the quota $Q_2$ allocated last time. Accordingly, there is a threshold $QT_3$=1.17M x 90% = 1.053M.

In Step 9, the OCS sends a DIAMERTER based CCA-U back to the PGW/HA. The Credit-Control-Answer includes attribute value pairs, Multiple-Services-Credit-Control [Rating-Group, $Q_3$(1.17M), $QT_3$(1.053M), VT(120s)...] etc. Moreover, the interface unit of the OCS records the sending time of the CCA-U in order to calculate the consumption speed of the quota.

Thereafter, the above steps are repeated until the communication is completed.

In this embodiment, communications with low consumption speeds are allocated less quotas, so as to distribute credits more reasonably among concurrent calls, to reduce occurrence of a case in which the allocated quota can not be consumed actually, to avoid occurrence of wasting and lack of credit and to prevent other concurrent sessions from lacking quotas.

It should be noted that embodiments or features in embodiments of the invention may be combined arbitrarily without conflicts.

For example, in the above two embodiments, the consumption speed of quota maintains a consistent trend such as increasing or decreasing. In an actual case, complex changes may occur to the consumption speed of quota. For example, the consumption speed may be first increased and then decreased. When the invention is used in this case, the quota allocated will be increased first, and then it will be decreased when the consumption speed of quota decreases.

Still for example, the above threshold related to the amount of quota is a reference value for requesting quota allocations in advance before quotas are used up to avoid delay. The threshold and the amount of quota per se have the same meaning in substance, both of which are representative of communication traffics that can be conducted during this allocation. They can be incorporated, that is, the request for reallocation of quota may be made when the amount of consumed quota reaches the amount of quota.

Still for example, in the above embodiments, the consumed time of the quota is obtained by calculating by the OCS the time difference between the recorded receiving time and sending time . In an alternative embodiment, the consumed time of the quota may be obtained by the traffic control device reporting it to the OCS.

It can be understood by those skilled in this art that all or some steps of the above methods may be implemented by related hardware instructed by programs that can be stored in computer readable storage media such a Read Only Memory, a magnetic disk or a compact disc. Optionally, all or some of the steps in the above embodiments may be implemented by one or more Integrated Circuits. Accordingly, each module/unit in the above embodiments may be achieved in the manner of hardware or software function modules. The invention is not limited to any particular forms of combination of hardware and software.

## Claims

1. A method for allocating quotas to a communication, the quotas being representative of communication traffics being conducted during an allocation, comprising steps of:

   i) allocating (2.) a quota to the communication; **characterized by**
   ii) acquiring (5.) an actual quota consumption speed for the communication based on the allocated quota; and
   iii) allocating (6.) a new quota to the communication according to the actual quota consumption speed;

   wherein the step ii further comprises acquiring a consumption speed of a quota allocated in a latest time; and acquiring an average consumption speed of a certain number of quotas allocated before the latest time; and
   the step iii further comprises adjusting the quota allocated in the latest time, an amount of adjusting being dependent on the difference between the consumption speed of the quota allocated in the latest time and the average consumption speed of the certain number of quotas allocated before the latest time; and
   wherein the certain number includes one or more.

2. The method of claim 1, wherein, in the step iii,
   when the consumption speed is increasing, a larger quota is allocated as the new quota; and when the consumption speed is decreasing, a smaller quota is allocated as the new quota.

3. The method of claims 1 or 2, wherein the step ii and step iii are iterated until the communication is completed.

4. The method of claim 1, wherein in the step iii, a product of the difference and a time constant is used as the amount of adjusting, the time constant being in the same order with the validity time of the quota, and the time constant being larger than, equal to or smaller than the validity time of the quota.

5. The method of claim 1, before the step i, the method further comprising a step of receiving a quota request from a traffic control device;
in the step i, informing the traffic control device amount of the allocated quota;
in the step ii, obtaining, from the traffic control device, an actual consumed amount of quota for the communication based on the allocated quota and actual communication time for the communication based on the allocated quota, and calculating the consumption speed of the quota; and
in the step iii, informing the traffic control device amount of the new quota.

6. The method of claim 5, wherein in the step i, the amount of the allocated quota, the validity time of the quota, a threshold for actively requesting reallocation of quotas are sent to the traffic control device, and the sending time is recorded, and wherein the threshold for requesting reallocation of quotas is associated with the amount of the allocated quota; and
wherein the step ii comprises:

receiving and recording the consumed amount of quota within the validity time of the quota sent by the traffic control device, and recording receiving time;
calculating and recording the consumption speed of the allocated quota according to the consumed amount of quota and time difference between the recorded receiving time and sending time; and
calculating the average consumption speed of the certain number of quotas allocated before the latest time from information recorded in previously repeated step ii.

7. The method of claim 6, wherein the step ii further comprises
receiving an actually consumed quota sent by the traffic control device after expiration of the validity time of the quota; or
receiving an actually consumed quota sent by the traffic control device when the consumed amount of the allocated quota reaches the threshold for actively requesting reallocation of quotas before expiration of the validity time of the quota.

8. An online charging system, comprising:

an allocating unit configured to allocate a quota to a communication, the quota being representative of communication traffics being conducted during an allocation; **characterized by**
a processing unit configured to acquire an actual quota consumption speed for the communication based on the allocated quota;
wherein the allocating unit is further configured to allocate a new quota to the communication according to the actual quota consumption speed, and
wherein the allocating unit and the processing unit operate iteratively;
wherein the processing unit is further configured to
acquire a consumption speed of a quota allocated in a latest time; and
acquire an average consumption speed of a certain number of quotas allocated before the latest time; and
wherein the allocating unit is further configured to adjust the quota allocated in the latest time, an amount of adjusting being dependent on the difference between the consumption speed of the quota allocated in the latest time and the average consumption speed of the certain number of quotas allocated before the latest time; and
wherein the certain number includes one or more.

9. The system of claim 8, wherein the allocating unit is further configured to
allocate a new larger quota when the consumption speed is increasing; and
allocate a new smaller quota when the consumption speed is decreasing.

10. The system of claim 8, wherein the allocating unit is further configured to use a product of the difference and a time constant as the amount of adjusting, the time constant being in the same order with the validity time of the quota, and the time constant being larger than, equal to or smaller than the validity time of the quota.

11. The system of claims 8 or 9, further comprising an interface unit configured to:

receive a quota request from a traffic control device;

inform the traffic control device amount of the allocated quota;

receive from the traffic control device an actual consumed amount of quota for the communication based on the allocated quota; and

inform the traffic control device amount of the new quota.

12. The system of claim 11, wherein the interface unit is configured to

send the validity time of the quota and a threshold for actively requesting reallocation of quotas to the traffic control device when sending the amount of the allocated quota, and record the sending time, and wherein the threshold for requesting reallocation of quotas is associated with the amount of the allocated quota; and

receive the consumed amount of quota within the validity time of the quota sent by the traffic control device, and record the receiving time; and

wherein the processing unit is further configured to

charge the consumed amount of quota;

obtain and record the consumption speed of the allocated quota according to the consumed amount of quota and a time difference between the receiving time and the sending time; and

calculate the average consumption speed of the certain number of quotas allocated before the latest time from information recorded previously.

13. The system of claim 12, wherein the interface unit is configured to

receive an actually consumed quota sent by the traffic control device after expiration of the validity time of the quota; or

receive an actually consumed quota sent by the traffic control device when the consumed amount of the allocated quota reaches the threshold for actively requesting reallocation of quotas before expiration of the validity time of the quota.

**Patentansprüche**

1. Verfahren zum Zuweisen von Quoten zu einer Kommunikation, wobei die Quoten repräsentativ sind für Kommunikationsverkehr, der durchgeführt wird während einer Zuweisung, die folgenden Schritte umfassend:

i) Zuweisen (2.) einer Quote zur Kommunikation; **gekennzeichnet durch**

ii) Erfassen (5.) einer aktuellen Quotenverbrauchsgeschwindigkeit für die Kommunikation auf Grundlage der zugewiesenen Quote; und

iii) Zuweisen (6.) einer neuen Quote zu der Kommunikation gemäß der aktuellen Quotenverbrauchsgeschwindigkeit;

wobei der Schritt ii weiterhin umfasst das Erfassen einer Verbrauchsgeschwindigkeit einer zu einem spätesten Zeitpunkt zugewiesenen Quote; und das Erfassen einer durchschnittlichen Verbrauchsgeschwindigkeit einer bestimmten Anzahl von Quoten, die vor dem spätesten Zeitpunkt zugewiesen worden sind; und

wobei der Schritt iii weiterhin umfasst das Einstellen der zu dem spätesten Zeitpunkt, wobei ein Einstellbetrag abhängig ist von der Differenz zwischen der Verbrauchsgeschwindigkeit der zugewiesenen Quote zu dem spätesten Zeitpunkt und der durchschnittlichen Verbrauchsgeschwindigkeit der bestimmten Anzahl von Quoten, die vor dem spätesten Zeitpunkt zugewiesen worden sind; und

wobei die bestimmte Anzahl Eins oder mehr einschließt.

2. Verfahren nach Anspruch 1, wobei, in Schritt iii,

wenn die Verbrauchsgeschwindigkeit steigt, eine größere Quote als neue Quote zugewiesen wird; und

wenn die Verbrauchsgeschwindigkeit abnimmt, eine kleinere Quote als neue Quote zugewiesen wird.

3. Verfahren nach Anspruch 1 oder 2, wobei der Schritt ii und der Schritt iii wiederholt werden, bis die Kommunikation beendet ist.

4. Verfahren nach Anspruch 1, wobei in dem Schritt iii, ein Produkt der Differenz und einer Zeitkonstanten als Einstellbetrag verwendet wird, wobei die Zeitkonstante derselben Größenordnung ist wie die Gültigkeitsdauer der Quote, und wobei die Zeitkonstante größer, gleich oder kleiner ist als die Gültigkeitsdauer der Quote.

5. Verfahren nach Anspruch 1, wobei das Verfahren vor dem Schritt i weiterhin umfasst einen Schritt des Empfangens einer Quotenanforderung von einem Verkehrskontrollgerät;

in dem Schritt i, Informieren des Verkehrskontrollgeräts über den Betrag der zugewiesenen Quote;

in dem Schritt ii, Erhalten, von dem Verkehrskontrollgerät, eines momentanen verbrauchten Quotenbetrags für die Kommunikation auf Grundlage der zugewiesenen Quote und der momentanen Kommunikationszeit für die Kommunikation auf Grundlage der zugewiesenen Quote und Berechnen der Verbrauchsgeschwindigkeit der Quote; und

in dem Schritt iii, Informieren des Verkehrskontrollgeräts über die neue Quote.

**6.** Verfahren nach Anspruch 5, wobei in dem Schritt i, der Betrag der zugewiesenen Quote, die Gültigkeitsdauer der Quote und ein Schwellenwert für die aktive Neuzuweisung von Quoten an das Verkehrskontrollgerät gesendet werden, und die Sendezeit aufgezeichnet wird, und wobei der Schwellenwert für das Anfordern der Neuzuweisung von Quoten verbunden ist mit dem Betrag der zugewiesenen Quote; und

wobei der Schritt ii weiterhin umfasst:

Empfangen und Aufzeichnen des verbrauchten Betrags der Quote innerhalb der Gültigkeitsdauer der Quote, die von dem Verkehrskontrollgerät gesendet worden ist, und Aufzeichnen der Empfangszeit;

Berechnen und Aufzeichnen der Verbrauchsgeschwindigkeit der zugewiesenen Quote gemäß dem verbrauchten Betrag der Quote und der Zeitdifferenz zwischen der aufgezeichneten Empfangszeit und Sendezeit; und

Berechnen der durchschnittlichen Verbrauchsgeschwindigkeit der bestimmten Anzahl von Quoten, die vor dem spätesten Zeitpunkt in dem vorher wiederholten Schritt ii aufgezeichneter Information zugewiesen worden sind.

**7.** Verfahren nach Anspruch 6, wobei der Schritt ii weiterhin umfasst

Empfangen einer momentan verbrauchten Quote, die von dem Verkehrskontrollgerät nach Ablaufen der Gültigkeitsdauer der Quote gesendet worden ist; oder

Empfangen einer momentan verbrauchten Quote, die von dem Verkehrskontrollgerät gesendet wird, wenn der verbrauchte Betrag der zugewiesenen Quote den Schwellenwert erreicht für das aktive Anfordern einer Neuzuweisung der Quoten, bevor die Gültigkeitsdauer der Quote abläuft.

**8.** Online-Vergebührungssystem, umfassend:

eine Zuweisungseinheit, die konfiguriert ist zum Zuweisen einer Quote zu einer Kommunikation, wobei die Quote repräsentativ ist für Kommunikationsverkehr, der während einer Zuweisung durchgeführt wird; **dadurch gekennzeichnet, dass** eine Verarbeitungseinheit konfiguriert ist zum Erfassen einer momentanen Quotenverbrauchsgeschwindigkeit für die Kommunikation auf Grundlage der zugewiesenen Quote;

wobei die Zuweisungseinheit weiterhin konfiguriert ist zum Zuweisen einer neuen Quote zu der Kommunikation gemäß der aktuellen Quotenverbrauchsgeschwindigkeit gemäß der momentanen Quotenverbrauchsgeschwindigkeit, und

wobei die Zuweisungseinheit und die Verarbeitungseinheit iterativ betrieben werden; wobei die Verarbeitungseinheit weiterhin konfiguriert ist zum

Erfassen einer Verbrauchsgeschwindigkeit einer zu einem spätesten Zeitpunkt zugewiesenen Quote; und

Erfassen einer durchschnittlichen Verbrauchsgeschwindigkeit einer bestimmten Anzahl von Quoten, die vor dem spätesten Zeitpunkt zugewiesen worden sind; und

wobei die Zuweisungseinheit weiterhin konfiguriert ist zum Einstellen der zu dem spätesten Zeitpunkt zugewiesenen Quote, wobei ein Einstellbetrag abhängig ist von der Differenz zwischen der Verbrauchsgeschwindigkeit der zugewiesenen Quote zu dem spätesten Zeitpunkt und der durchschnittlichen Verbrauchsgeschwindigkeit der bestimmten Anzahl von Quoten, die vor dem spätesten Zeitpunkt zugewiesen worden sind; und

wobei die bestimmte Anzahl Eins oder mehr einschließt.

**9.** System nach Anspruch 8, wobei die Zuweisungseinheit weiterhin konfiguriert ist zum

Zuweisen einer neuen größeren Quote, wenn die Verbrauchsgeschwindigkeit steigt; und

Zuweisen einer neuen kleineren Quote, wenn die Verbrauchsgeschwindigkeit abnimmt.

**10.** System nach Anspruch 8, wobei die Zuweisungseinheit weiterhin konfiguriert ist zum Verwenden eines Produkts der Differenz und einer Zeitkonstanten als Einstellbetrag, wobei die Zeitkonstante derselben Größenordnung ist wie die Gültigkeitsdauer der Quote, und wobei die Zeitkonstante größer, gleich oder kleiner ist als die Gültigkeitsdauer der Quote.

**11.** System nach Anspruch 8 oder 9, weiterhin umfassend eine Schnittstelleneinheit, die konfiguriert ist zum:

Empfangen einer Quotenanforderung von einem Verkehrskontrollgerät;
Informieren des Verkehrskontrollgeräts über den Betrag der zugewiesenen Quote;
Empfangen von dem Verkehrskontrollgerät eines momentan verbrauchten Betrags einer Quote für die Kommunikation auf Grundlage der zugewiesenen Quote; und
Informieren des Verkehrskontrollgeräts über den Betrag der neuen Quote.

**12.** System nach Anspruch 11, wobei die Schnittstelleneinheit konfiguriert ist zum Senden der Gültigkeitsdauer der Quote und eines Schwellenwertes für das aktive Anfordern einer Neuzuweisung von Quoten an das Verkehrskontrollgerät, wenn der Betrag der zugewiesenen Quote gesendet wird, und Aufzeichnen der Sendezeit, und wobei der Schwellenwert für die Anforderung der Neuzuweisung von Quoten verbunden ist mit dem Betrag der zugewiesenen Quote; und
Empfangen des verbrauchten Betrags der Quote innerhalb der Gültigkeitsdauer der Quote, die von dem Verkehrskontrollgerät gesendet worden ist, und Aufzeichnen der Empfangszeit; und
wobei die Verarbeitungseinheit weiterhin konfiguriert ist zum Vergebühren des verbrauchten Betrags der Quote;
Erhalten und Aufzeichnen der Verbrauchsgeschwindigkeit der zugewiesenen Quote gemäß dem verbrauchten Betrag der Quote und einer Zeitdifferenz zwischen der Empfangszeit und der Sendezeit; und
Berechnen der durchschnittlichen Verbrauchsgeschwindigkeit der bestimmten Anzahl von Quoten, die vor dem spätesten Zeitpunkt vorher aufgezeichneter Information zugewiesen worden sind.

**13.** System nach Anspruch 12, wobei die Schnittstelleneinheit konfiguriert ist zum
Empfangen einer momentan verbrauchten Quote, die von dem Verkehrskontrollgerät nach Ablaufen der Gültigkeitsdauer der Quote gesendet worden ist; oder
Empfangen einer momentan verbrauchten Quote, die von dem Verkehrskontrollgerät gesendet wird, wenn der verbrauchte Betrag der zugewiesenen Quote den Schwellenwert erreicht für das aktive Anfordern einer Neuzuweisung der Quoten, bevor die Gültigkeitsdauer der Quote abläuft.

## Revendications

**1.** Procédé destiné à une attribution de quotas à une communication, les quotas étant représentatifs de trafics de communication étant effectués pendant une attribution, comprenant les étapes :

i) d'attribution (2.) d'un quota à la communication ; **caractérisé par**
ii) une acquisition (5.) d'un quota réel de vitesse de consommation pour la communication sur la base du quota attribué ; et
iii) une attribution (6.) d'un nouveau quota à la communication selon la vitesse de consommation de quota réelle ;

dans lequel l'étape ii comprend en outre une acquisition d'une vitesse de consommation d'un quota attribué dans un temps le plus tardif ; et une acquisition d'une vitesse de consommation moyenne d'un certain nombre de quotas attribués avant le temps le plus tardif ; et
l'étape iii comprend en outre un ajustement du quota attribué dans le temps le plus tardif, une quantité d'ajustement étant dépendante de la différence entre la vitesse de consommation du quota attribué dans le temps le plus tardif et la vitesse de consommation moyenne du certain nombre de quotas attribués avant le temps le plus tardif ; et
dans lequel le certain nombre inclut un ou plusieurs.

**2.** Procédé selon la revendication 1, dans lequel, dans l'étape iii,
lorsque la vitesse de consommation augmente, un quota plus important est attribué à titre de nouveau quota ; et
lorsque la vitesse de consommation diminue, un quota plus petit est attribué à titre de nouveau quota.

**3.** Procédé selon les revendications 1 ou 2, dans lequel l'étape ii et l'étape iii sont répétées jusqu'à ce que la communication soit terminée.

**4.** Procédé selon la revendication 1, dans lequel dans l'étape iii, un produit de la différence et d'une constante de temps est utilisé à titre de quantité d'ajustement, la constante de temps étant du même ordre que le temps de validité du quota, et la constante de temps étant plus importante que, égale à ou inférieure au temps de validité du quota.

**5.** Procédé selon la revendication 1, avant l'étape i, le procédé comprenant en outre une étape de réception d'une demande de quota à partir d'un dispositif de commande de trafic ;

dans l'étape i, une information de la quantité de dispositif de commande de trafic du quota attribué ;

dans l'étape ii, une obtention, à partir du dispositif de commande de trafic, d'une quantité consommée réelle de quota pour la communication sur la base du quota attribué et d'un temps de communication réel pour la communication sur la base du quota attribué, et un calcul de la vitesse de consommation du quota ; et

dans l'étape iii, une information de la quantité de dispositif de commande de trafic du nouveau quota.

6. Procédé selon la revendication 5, dans lequel dans l'étape i, la quantité du quota attribué, le temps de validité du quota, un seuil pour une demande active d'une réattribution de quotas sont envoyés au dispositif de commande de trafic, et le temps d'envoi est enregistré, et dans lequel le seuil pour une demande de réattribution de quotas est associé à la quantité du quota attribué ; et

dans lequel l'étape ii comprend :

une réception et un enregistrement de la quantité consommée de quota à l'intérieur du temps de validité du quota envoyé par le dispositif de commande de trafic, et un enregistrement d'un temps de réception ;

un calcul et un enregistrement de la vitesse de consommation du quota attribué selon la quantité consommée de quota et une différence de temps entre le temps de réception enregistré et un temps d'envoi ; et

un calcul de la vitesse de consommation moyenne du certain nombre de quotas attribués avant le temps le plus tardif à partir d'informations enregistrées dans une étape ii précédemment répétée.

7. Procédé selon la revendication 6, dans lequel l'étape ii comprend en outre

une réception d'un quota réellement consommé envoyé par le dispositif de commande de trafic après une expiration du temps de validité du quota ; ou

une réception d'un quota réellement consommé envoyé par le dispositif de commande de trafic lorsque la quantité consommée du quota attribué atteint le seuil pour une demande active d'une réattribution de quotas avant une expiration du temps de validité du quota.

8. Système de paiement en ligne, comprenant :

une unité d'attribution configurée pour attribuer un quota à une communication, le quota étant représentatif de trafics de communication étant effectués pendant une attribution ; **caractérisé par**

une unité de traitement configurée pour acquérir une vitesse de consommation de quota réelle pour la communication sur la base du quota attribué ;

dans lequel l'unité d'attribution est en outre configurée pour attribuer un nouveau quota à la communication selon la vitesse de consommation de quota réelle, et

dans lequel l'unité d'attribution et l'unité de traitement fonctionnent de manière itérative ;

dans lequel l'unité de traitement est en outre configurée pour

acquérir une vitesse de consommation d'un quota attribué dans un temps le plus tardif ; et

acquérir une vitesse de consommation moyenne d'un certain nombre de quotas attribués avant le temps le plus tardif ; et

dans lequel l'unité d'attribution est en outre configurée pour ajuster le quota attribué dans le temps le plus tardif, une quantité d'ajustement dépendant de la différence entre la vitesse de consommation du quota attribué dans le temps le plus tardif et la vitesse de consommation moyenne du certain nombre de quotas attribués avant le temps le plus tardif ; et

dans lequel le certain nombre inclut un ou plusieurs.

9. Système selon la revendication 8, dans lequel l'unité d'attribution est en outre configurée pour

attribuer un nouveau quota plus important lorsque la vitesse de consommation augmente ; et

attribuer un nouveau quota plus petit lorsque la vitesse de consommation diminue.

10. Système selon la revendication 8, dans lequel l'unité d'attribution est en outre configurée pour utiliser un produit de la différence et d'une constante de temps à titre de quantité d'ajustement, la constante de temps étant du même ordre que le temps de validité du quota, et la constante de temps étant plus importante, égale à ou inférieure au temps de validité du quota.

11. Système selon les revendications 8 ou 9, comprenant en outre une unité d'interface configurée pour :

une réception d'une demande de quota à partir d'un dispositif de commande de trafic ;

une information de la quantité de dispositif de commande trafic du quota attribué ;

une réception à partir du dispositif de commande de trafic d'une quantité consommée réelle de quota pour la communication sur la base du quota attribué ; et

une information de la quantité de dispositif de commande de trafic du nouveau quota.

12. Système selon la revendication 11, dans lequel l'unité d'interface est configurée pour

envoyer le temps de validité du quota et un seuil pour une demande active d'une réattribution de quotas au dispositif de commande de trafic lors d'un envoi de la quantité du quota attribué, et enregistrer le temps d'envoi, et dans lequel le seuil pour une demande de réattribution de quotas est associé à la quantité du quota attribué ; et

recevoir la quantité consommée de quota à l'intérieur du temps de validité du quota envoyé par le dispositif de commande de trafic, et enregistrer le temps de réception ; et

dans lequel l'unité de traitement est en outre configurée pour faire payer la quantité consommée de quota ;

obtenir et enregistrer la vitesse de consommation du quota attribué selon la quantité consommée de quota et une différence de temps entre le temps de réception et le temps d'envoi ; et

calculer la vitesse de consommation moyenne du certain nombre de quotas attribués avant le temps le plus tardif à partir d'informations précédemment enregistrées.

13. Système selon la revendication 12, dans lequel l'unité d'interface est configurée pour

recevoir un quota réellement consommé envoyé par le dispositif de commande de trafic après une expiration du temps de validité du quota ; ou

recevoir un quota réellement consommé envoyé par le dispositif de commande de trafic lorsque la quantité consommée du quota attribué atteint le seuil pour une demande active de réattribution de quotas avant une expiration du temps de validité du quota.

Fig. 1

| Quota | Quota Threshold | Reported Cons. Amt. | Validity Time | Consumed Time |
|---|---|---|---|---|
| Q1=5M | 4.5M | 4.5M | 120s | 30s |
| Q2=15.8M | 14.22M | 14.22M | 120s | 90s |
| Q3=16.6M | 14.94M | 14.94M | 120s | 90s |
| ... | ... | ... | ... | ... |

Fig. 2

| Quota | Quota Threshold | Reported Conm. Amt. | Validity Time | Consumed Time |
|---|---|---|---|---|
| Q1=5M | 4.5M | 0.5M | 120s | 120s |
| Q2=1.25M | 1.125M | 0.4M | 120s | 120s |
| Q3=1.17M | 1.053M | 0.5M | 120s | 120s |
| ... | ... | ... | ... | ... |

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. HAKALA ; L. MATTILA ERICSSON ; J-P. KOSKINEN ; M. STURA ; J. LOUGHNEY NOKIA.** *Diameter Credit-Control Application; rfc4006.txt,* 01 August 2005